# EUROPEAN PATENT APPLICATION

(11) **EP 1 691 009 A1**
(43) Date of publication of application: **16.08.2006**
(21) Application number: 05003099.8
(22) Date of filing: 14.02.2005
(51) Int. Cl.: E04G 21/12

(54) **Streching machine of reinforcing cables for precompressed reinforced cement**

(71) Applicant: CONTEC S.R.L., 35010 Carmignano di Brenta (Padova) (IT)
(72) Inventor: Baccega, Silvano, 35014 Fontaniva (Padova) (IT); Raccanello, Fabrizio, 35013 Cittadella (Padova) (IT); Tonin, Giorgio, 35013 Cittadella (Padova) (IT)
(74) Representative: Bettello, Pietro

(57) **Abstract**

The finding refers to a stretching machine (1) of reinforcing cables for manufactured products made from precompressed and postcompressed reinforced cement, provided with apparatus through which it is possible to program and control the actual data relative to the mechanical snubbing operation of the cables themselves. The stretching jacks (2) of the machine in object comprise a dynamometer device associated with transmission and display means (3) of the actual values of the loads applied to the reinforcing cables.

## Description

The invention refers to a stretching machine of reinforcing cables for manufactured products made from precompressed and postcompressed reinforced cement, provided with apparatus through which it is possible to program and control the actual data relative to the mechanical snubbing operation of the cables themselves.

The same invention also concerns the aforementioned apparatus.

It is known that in the field of the production of manufactured products made from precompressed and postcompressed reinforced cement, hereafter referred to as p.r.c., the snubbing of the reinforcing cables (be they smooth wires, braids or strands) that must apply the precompression to the structure, is generally carried out with the use of oleodynamic control units and suitable hollow piston stretching jacks.

In general, in precompression (although the consideration can also be extended by analogy to post-tension) the snubbing, also of cables of different diameters, takes place with a single stretching jack (in common jargon also known as "stretcher") equipped with suitable adaptors or reductions to adapt it to the different types of cable.

The operation takes place by manually adjusting the pressure of the hydraulic circuit according to the force required by the section of the cables to be snubbed.

The theoretical snubbing force must necessarily be correct with the use of suitable dynamometers in consideration of the hydraulic load losses of the circuit, variable based upon the actual operating conditions (temperature, friction, wear of the apparatus, etc.), for which reason the adjustment of the pressure of the circuit must be carried out by trusted personnel who are trained in the use of the apparatus.

Often, however, such adjustments, carried out in precarious conditions and not always with the use of the dynamometer, cannot ensure the necessary precision of the load to be applied to the cables.

Some more evolved machines foresee use in the precompression of many stretching jacks, each intended for a different type of cable, and each managed with differentiated hydraulic circuits and suitable adjustment valves.

In this way, the adjustments passing from the snubbing of one cable to that of another is avoided, but there remains the need to carry out the suitable corrections of the pressure as the aforementioned conditions of use vary.

Considering the hard conditions of use present at the various locations where such apparatuses are used, very often it is necessary to carry out these adjustments with a certain frequency, in order to ensure the constancy of the snubbing quality carried out.

In all of the apparatuses used up to now the snubbing system foresees controlling the force to be applied to the cables (apart from during the adjustment operations) through controlling the pressure of the hydraulic circuit, or with sample use of the dynamometer.

The calibration of the pressure, both on mono-jack control units and on control units with many stretching jacks, is carried out by manually adjusting the top pressure valves (for work and safety) of each circuit, with the prior application of the dynamometer on the stretching jack involved and selection of the relative circuit.

The adjustment valves are progressively tightened until the desired load visualised on the dynamometer display is reached; at this point the valves lock and the machine is ready to be used.

As already stated, technical variations of the circuit, poor care in the tightening of the valves, counter pressures of the circuit (water hammer) and other anomalies can lead to different adjustments that are not always correct.

Moreover, very often the pressure control instrument (manometer) applied to the control unit can undergo knocks or accidental collisions due to the continuous movements that the machine undergoes generally in building yards, and therefore lose the initial calibration and precision, with a consequent irregularity of indication and snubbing.

Hydraulic control units that use, instead of the manometer, reading systems using pressure transducers and digital displays, are also not exempt from possible faulty adjustments and cannot ensure the necessary corrections as the conditions of use vary.

Basically, the calibration of the control unit is too often left to the expertise of the operator who does not always respect to correct procedures to ensure the foreseen snubbing quality, or does not always intervene to vary the calibration as the conditions of use vary, for which reason errors and/or imprecisions in setting can always be possible and even frequent.

Finally there is no recording of snubbing data, for which reason the possible disputing of the declared values would require a load test on the manufactured product in a control step, which, for obvious reasons, is highly unlikely to be carried out.

In relation to the type of reinforcing cables generally used it should be highlighted how two or at most three braid or strand measurements are used increasingly often in most manufactured products.

Strands with a half inch (12.5 mm) and 6/10 inch (15.2mm) diameter are used a lot as main reinforcement and, three-wire strand is used a lot, often just as secondary reinforcement.

In such cases, above all where control units with two or more stretching jacks are used for different cables, and with the possibility of calibrating each of them with pressures corresponding to partial and final snubbing it should be highlighted how the adjustment of all of the various values becomes a long and complex operation, with multiple possibilities for errors and how this often makes the possibility of carrying out subsequent adjustments difficult.

The present invention intends to overcome the aforementioned drawbacks.

The main purpose of the finding is that of making a stretching machine that allows the programming (or even the snubbing data) to be programmed, controlled and recorded so as to ensure the total correspondence of the load value applied to the cable with the programmed value, also as the conditions of use of the machine vary and therefore according to its actual yield.

Another purpose of the finding is to integrate it with the system object of Italian patent no. 1302481 to the same Applicant, with the aim of ensuring that the snubbing data is controlled programmed and recorded, even remotely, with the means foreseen here.

Such a patent concerns an integrated system for programming, controlling and recording the snubbing data of the metal reinforcement in plants for producing manufactured products made from precompressed reinforced cement, which comprises the following steps:
a step of programming and storing design data relative to the snubbing of the reinforcement of each manufactured product;
a step of transferring the program to the stretching machine;
a step of carrying out the snubbing program and of checking that the actual snubbing data corresponds with the design data;
a step of recording and filing the final snubbing data.

Such a patent also concerns an apparatus capable of actuating the above system.

The aforementioned purposes and others that shall become clearer hereafter are accomplished by devising a stretching machine of reinforcing cables that, in accordance with the content of the first claim, comprises a mobile structure that substantially supports an oleodynamic motor-pump group, an oleodynamic control unit equipped with an electronic apparatus for programming and inserting snubbing data, at least one stretching jack, and is characterised in that said at least one stretching jack comprises a dynamometer device associated with transmission and display means of the actual values of the loads applied to said reinforcing cables.

In a preferred embodiment of the finding, the aforementioned dynamometer device is integrated within the tip of the stretching jack and consists of a load cell.

The stretching machine of the finding is also ideally arranged in the integrated system for programming, controlling and recording snubbing data, object of the patent quoted above.

The purposes listed above shall become clearer during the following description that refers to the preferred embodiment and to the ideal arrangement of the aforementioned stretching machine, a description that makes use of the attached tables of drawings, where:
fig. 1 shows a perspective view of the stretching machine complete and equipped with three stretchers for three reinforcing cable measurements;
figs. 2 and 3 show, in a perspective view and in two plan views respectively, the tip of one of the stretching jacks;
fig. 4 shows the control viewer of the machine with the commands for the selection of the different programmable loads;
fig. 5 shows a kit of the apparatus to be used for installation on pre-existing stretchers;
fig. 6 shows a perspective view of how the operator carries out the selection of the hydraulic circuit of the stretching jack that must be used;

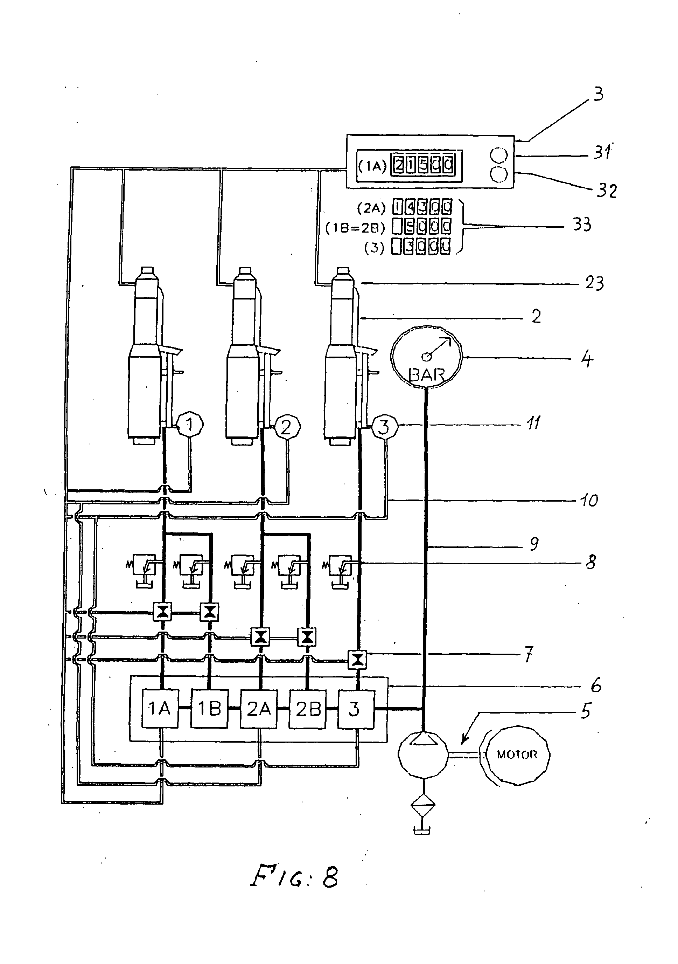

fig. 7 shows the use of the stretching machine during the snubbing operating in post-tension;
fig. 8 shows the functional scheme of the stretching machine equipped with three stretching jacks;
fig. 9 shows the functional scheme of the stretching machine equipped with four stretching jacks;
fig. 10 schematically shows the integration of the stretching machine with the patented system quoted above.

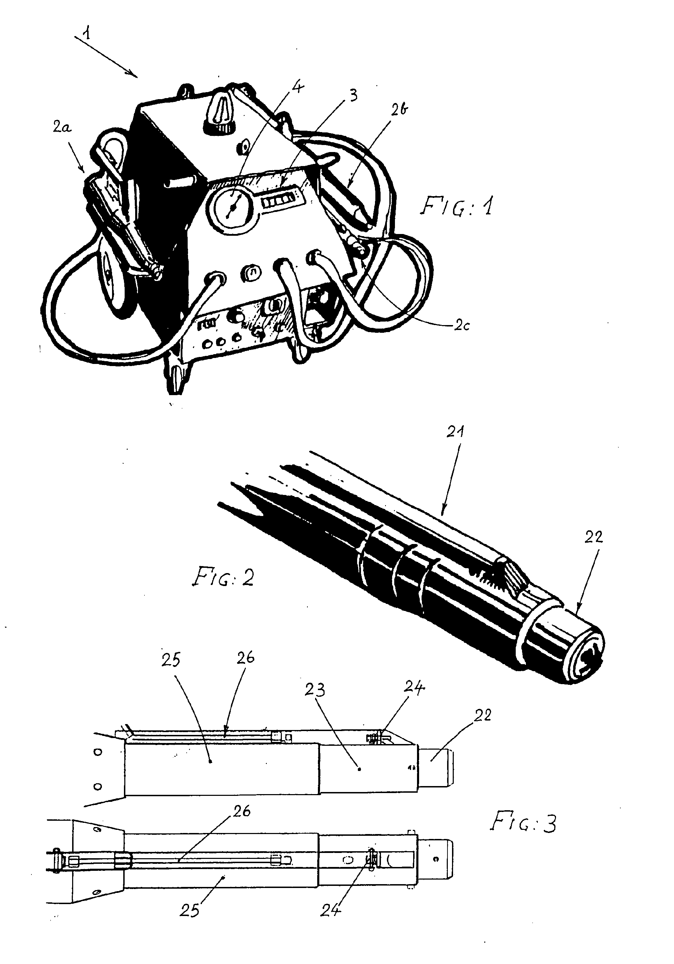

The stretching machine object of the present finding is shown in its external appearance in figure 1, where it is indicated with 1.

It is equipped with at least one stretching jack (which we shall indicate hereafter with 2), typically with the three stretching jacks 2a, 2b and 2c, represented in the same figure 1 fitted onto the frame of the machine.

In the same figure 1 the control viewer of the stretching machine is shown, with the commands 3 for selecting the different programmable loads and the manometer 4 that allows the fluctuations in pressure according to the yield of the machine to be checked immediately, with a constant load.

Figure 2 shows a perspective view of the front part of each stretching jack 2, a part that hereafter we shall simply call the "tip" and we shall indicate with 21.

The two representations in plan of figure 3 show the components of the aforementioned tip in greater detail, which comprise:
the hollow cylindrical element 22 through which the end of the cable to be snubbed is introduced.
the cylindrical container 23 of the dynamometer device for controlling the snubbing, which detects the actual values of the load applied to the cable itself and, through an electric cable gripping the connector 24, transfers the data relative to the loads themselves to the electronic apparatus of the machine;
the oleodynamic cylinder 25 that, supplied by the duct 26, causes the gradual traction force on the cable to be stretched.

The whole of the dynamometer device is directly integrated in the structure of the tip, perfectly protected in the cylindrical container 23 and without any cable or external connection, for which reason during the snubbing operations there is no tangling and danger of damage.

The subsequent figure 4 shows the detail of the aforementioned control viewer, in an enlarged view with respect to that of figure 1.

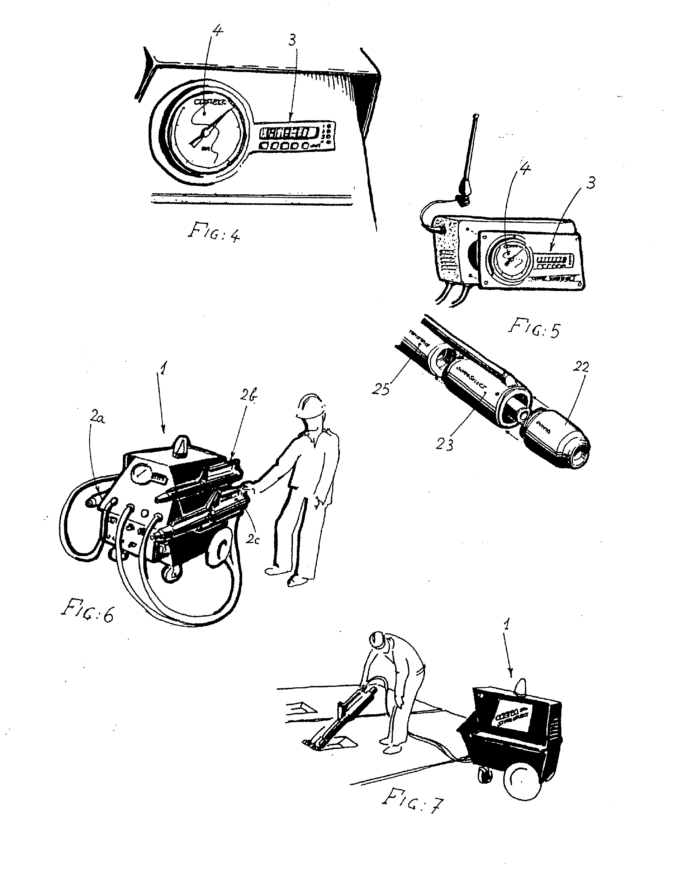

Figure 5 shows the whole of the kit required to integrate the stretching machines already in use. The relative components are indicated here with the same reference numerals.

The use of the kit foresees the direct modification to the existing stretching machines and to the set up of the relative control units.

The snubbing program carried out with the use of the apparatus comprising the stretching machine of the present finding requires the following steps:
a step of programming and storing design data relative to the snubbing of the reinforcement of each manufactured product;
a step of inserting the program data into the stretching machine (or of transferring the data if integrated with the system of the patent quoted previously);
a step of carrying out the snubbing program and of checking that the actual snubbing data corresponds with the design data;
a step of recording and filing the design data and of recording and filing the final snubbing results (if integrated with the previous patented system).

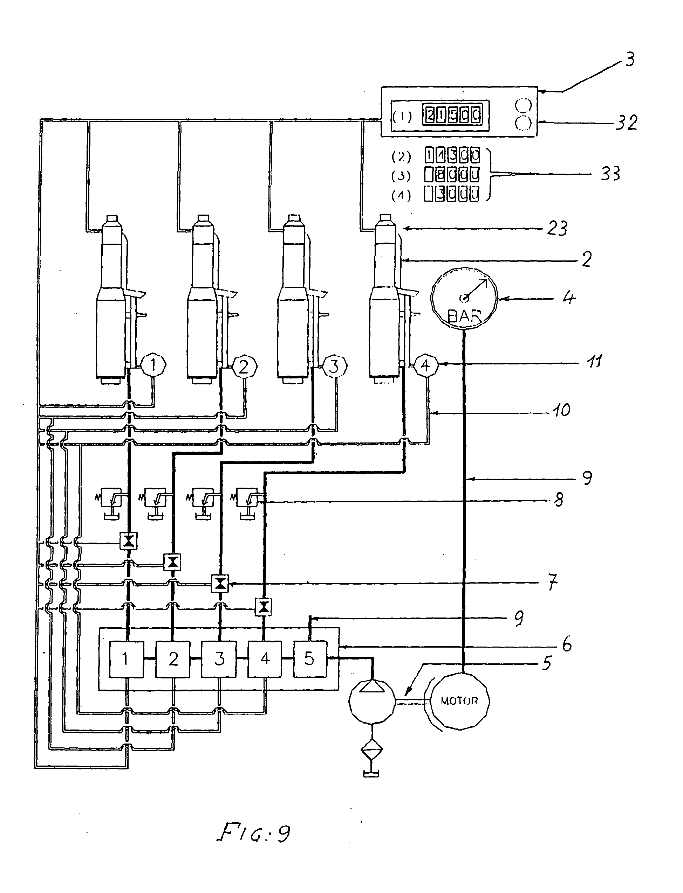

According to a preferred embodiment, the apparatus that carries out the program outlined above comprises the components shown in the schemes of figures 8 and 9 relative to the solution with three or four stretching jacks, respectively.

Such components are essentially:
the motor-pump group 5; the hydraulic distribution block 6; the circuit selection and hydraulic supply blocking valves 7; the hydraulic safety valves 8; the hydraulic connection lines 9; the electrical connection lines 10; the buttons 11 for the activation of the relative stretching jack and for the selection of the corresponding hydraulic circuit; the control manometer 4; the stretching jacks 2 with the dynamometer device integrated in the cylindrical element 23; the display 3 that visualises the load applied and that comprises the button/indicator 31 for selecting the partial snubbing data and the button/indicator 32 for selecting the total snubbing data.

The dynamometer device that acts as a sensor of the pulling force applied to the cable to be stretched preferably consists of a load cell.

An example of the aforementioned data is shown in the legend 33 represented under the display 3.

In the cases exemplified in figures 8 and 9, where the use of many stretching jacks 2 that can be used for different types of strand is foreseen, the present invention foresees that the circuit relative to the strand to be snubbed is activated as soon as the stretcher to be used is gripped and the snubbing button 11 is pressed, as shown in figure 6.

The apparatus activated in this way automatically restrains the remaining stretching jacks preventing the operator from making any error in manoeuvring.

To pass to the snubbing of another strand an authorisation or preset button must be pressed beforehand.

With reference to the practical conditions of use that most frequently occur in the industry of p.r.c. manufactured products it should be specified that one often operates with 2 types of main reinforcing strand and with an additional cable having the function of auxiliary support reinforcement and it is often also necessary to be able to work with an initial pre-snubbing, both to ease the reinforcement operations and the control operations of the lengthening of the strand itself.

For such a purpose, the object of the present invention foresees:
the possibility of setting the snubbing load value of a first type of strand that must be snubbed (load "1A" indicated in the legend 33 of figure 8), with an electronic device and a keypad applied directly onto the machine;
the possibility of setting, in the same way, the snubbing load value of a second type of strand that must be snubbed (load "2A" of the same legend 33 of figure 8);
the possibility of setting, in the same way, the pre-snubbing (or partial snubbing) load value for the 2 strands to be snubbed (selection "1B" or else "2B" of the same legend of figure 8);
the possibility of setting, in the same way, the final snubbing load value for a third type of cable (strand, braid or wire) (load "3" of the same legend);
the control of the set load through the dynamometer device (with load control and independent from the pressure control of the hydraulic circuit) applied and integrated completely into the corresponding stretching jack.

The stretching machine to which the scheme of figure 9 refers is used in the case in which four different cables have to be used and it is equipped with four stretching jacks, each controlled with its own dynamometer device for snubbing with four different loads.

To obtain the maximum guarantee of the loads before use, the apparatus must be calibrated instrumentally with a suitable certificated dynamometer.

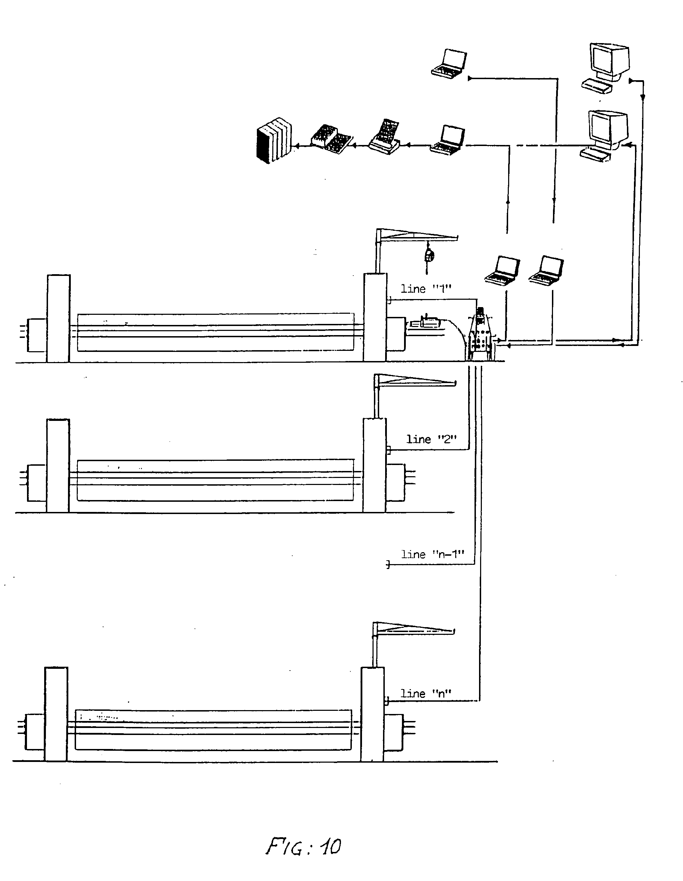

The setting of the required values can also be carried out with the system object of the previous patent, through connection via radio or via cable as foreseen by the inherent patent and according to what is represented in figure 10 that shows the application of the stretching machine to one of the "n" production lines.

The apparatus of figures 8 and 9 foresees, for each circuit corresponding to the load applied, the assembly of a series of hydraulic safety control valves 8 that can intervene up to a maximum programmed value, so as to avoid the possibility of reaching the breaking point of the cable during snubbing.

Also in the case in which the apparatus itself has to be used to carry out unlocking and slackening operations of a snubbed strand, a suitable selector allows work to be temporarily carried out with a higher pressure than the snubbing pressure, but still within the safety limits.

Once the programming of the loads has been carried out, the operator uses the apparatus normally, just taking care to finish the snubbing operation until the predetermined value is reached and maintained, which is visualised in the control unit display.

In the basic configuration the apparatus allows connection, through a serial port for downloading the programming data in relation to the use data, to allow filing.

In the configuration of figure 10, the apparatus also allows all data relative to the snubbing carried out to be downloaded, according to the characteristics of the already patented system.

From what has been outlined, the novelty and originality of the devised stretching machine is clear, especially as far as the purpose of easing the setting of the snubbing data and that of ensuring the maximum degree of control of the force applied through the dynamometer devices integrated in the stretching jacks are concerned.

In the production step the stretching machine of the invention can be modified and integrated in some of its embodiments, still in any case remaining within the inventive concepts outlined extensively. Each variant embodiment shall fall within the scope of protection of the present invention.

## Claims

1. Stretching machine of reinforcing cables comprising a mobile structure that substantially supports an oleodynamic motor-pump group, an oleodynamic control unit equipped with an electronic apparatus for programming and inserting snubbing data, at least one stretching jack, and is **characterised in that** said at least one stretching jack (2) comprises a dynamometer device associated with transmission and display means of the actual values of the loads applied to said reinforcing cables.

2. Stretching machine of reinforcing cables according to claim 1, **characterised in that** said dynamometer device is contained in a cylindrical element (23) arranged and integrated in the tip (21) of said at least one stretching jack (2).

3. Stretching machine of reinforcing cables according to claims 1 and 2, **characterised in that** said dynamometer device is a load cell.

4. Apparatus for stretching machines, **characterised in that** it comprises a dynamometer device associated with transmission and display means of the snubbing load values, the whole thing being produced and supplied as a kit suitable for being applied to existing stretching machines.

5. Stretching machine of reinforcing cables and apparatus for said machines according to the previous claims, **characterised in that** it integrates with the system object of Italian patent no. 1302481 to the same Applicant, with the aim of ensuring the programming, controlling and recording of the snubbing data, also remotely, with the means foreseen here, the system of such a patent comprising the following steps:
a step of programming and storing design data relative to the snubbing of the reinforcement of each manufactured product;
a step of transferring the program to the stretching machine;
a step of carrying out the snubbing program and of checking that the actual snubbing data corresponds with the design data;
a step of recording and filing the final snubbing data.
